**Europäisches Patentamt**

**European Patent Office**

**Office européen des brevets**

(19)

(11) Veröffentlichungsnummer : **0 093 819**
**B1**

(12) **EUROPÄISCHE PATENTSCHRIFT**

(45) Veröffentlichungstag der Patentschrift :
**21.11.85**

(51) Int. Cl.⁴ : **H 04 L 27/10**

(21) Anmeldenummer : **82810177.4**

(22) Anmeldetag : **29.04.82**

(54) **System zur Funkübertragung eines binär kodierten Signals.**

(43) Veröffentlichungstag der Anmeldung :
**16.11.83 Patentblatt 83/46**

(45) Bekanntmachung des Hinweises auf die Patenterteilung : **21.11.85 Patentblatt 85/47**

(84) Benannte Vertragsstaaten :
**AT DE FR GB IT SE**

(56) Entgegenhaltungen :
**DE-A- 1 537 007**
**FR-A- 2 308 260**
**GB-A- 1 022 598**
**US-A- 3 454 718**
**US-A- 3 823 385**
**US-A- 4 019 142**

(73) Patentinhaber : **Autophon A.G.**
**Ziegelmattstrasse 1-15**
**CH-4500 Solothurn 3 (CH)**

(72) Erfinder : **Masur, Christian**
**Weiherlimattstrasse 7**
**CH-4514 Lommiswil (CH)**

(74) Vertreter : **Schweizer, Hans et al**
**Bovard AG Patentanwälte VSP Optingenstrasse 16**
**CH-3000 Bern 25 (CH)**

## Beschreibung

Die vorliegende Erfindung betrifft ein System zur Funkübertragung eines binär kodierten Signals. In allgemein üblichen derartigen Systemen wird zur Uebertragung die Frequenz-Versatz-Modulation (FSK) angewendet, indem jedem Binärwert eine von zwei verhältnismässig nahe beieinanderliegenden Frequenzen zugeteilt ist und diese beiden Frequenzen, entsprechend dem zu übermittelnden Signal, abwechslungsweise einem Hochfrequenzträger in irgend einer Weise aufmoduliert werden, worauf der Träger ausgesendet wird. Auf der Empfangsseite wird das Hochfrequenzsignal demoduliert und das dabei entsprechende, die genannten beiden Frequenzen enthaltende Niederfrequenzsignal mit Hilfe von zwei auf diese Frequenz abgestimmten Bandpassfiltern wiederum in die zu übertragenden Binärwerte zurückverwandelt. Die Uebertragungsgeschwindigkeit ist dabei durch die Einschwingzeit der Bandpassfilter, die wiederum mit der notwendigen Kreisgüte zusammenhängt, begrenzt. Diese Kreisgüte ist ihrerseits wiederum vom Unterschied der den beiden Binärwerten entsprechenden Frequenzen abhängig.

Es ist bekannt, die grosse Bandbreite, die bei der auf irgend eine Weise erfolgenden Uebertragung eines Rechtecksignals benötigt wird, zu vermindern, indem den Flanken der Signale eine Sinusform erteilt wird. Es ist auch bekannt, diese Sinusform auf digitale Weise durch eine programmierte Anschaltung von verschiedenen Spannungsstufen und anschliessende Siebung durch ein Tiefpassfilter zu erzeugen.

Aus der deutschen Offenlegungsschrift 15 37 007 ist eine binäre Kodierung von Signalen bekannt geworden, welche gegen Uebertragungsstörungen verhältnismässig unempfindlich ist, bei welcher ausschliesslich Impulse gleicher Länge verwendet werden und bei welcher die beiden Binärwerte durch einen kleinen und einen grossen Abstand zwischen den Impulsen gebildet sind.

In Anlagen, in welchen ein binär kodiertes Signal nur zwischen zwei Punkten übertragen werden muss, spielt die Verteilung des Aufwandes auf Sende- und Empfangsseite keine grosse Rolle. Ist dagegen ein Sender und mehrere Empfänger vorhanden, ist ein möglichst kleiner Aufwand auf der Empfangsseite anzustreben.

Mit der vorliegenden Erfindung wird nun die Aufgabe gelöst, ein binär kodiertes Signal bei angemessener Unempfindlichkeit gegen Störungen, mit im Vergleich zur Uebertragungsgeschwindigkeit kleiner Bandbreite und mit einem verhältnismässig kleinen Aufwand auf der Empfangsseite drahtlos zu übertragen. Dabei wird Gebrauch gemacht von der erwähnten Frequenzbandbreite sparenden Technik und vom beschriebenen besondern Kode. Die vorliegende Erfindung betrifft nun ein System zur Funkübertragung eines binär kodierten Signals mit sendeseitigen Schaltungsmitteln, welche das Signal in geeigneter Weise umformen und das umgeformte Signal einem Hochfrequenzsignal in einer beliebigen, für die Uebertragung von Analogsignalen geeigneten Modulationsart aufmodulieren. Das System enthält ferner empfangsseitige Schaltungsmittel, welche das Hochfrequenzsignal demodulieren und das demodulierte Signal einem Begrenzer zuführen, welcher ein von der momentanen Polarität des an ihn gelegten Signals abhängiges bipolares Signal abgibt. Die Erfindung ist gekennzeichnet durch eine derartige Ausbildung der genannten sendeseitigen Schaltungsmittel, dass diese Schaltungsmittel einen ihnen zugeführten Binärwert erster Art in eine einzelne vollständige Sinusschwingung einer ersten Frequenz und einen ihnen zugeführten Binärwert zweiter Art in eine aus einem Schwingungspaket einer zweiten Frequenz und einer einzelnen vollständigen Schwingung der genannten ersten Frequenz bestehende Folge umformen. Die genannte zweite Frequenz ist dabei ein die Zahl drei übersteigendes Vielfaches der genannten ersten Frequenz, und die genannte einzelne Schwingung weist in allen Fällen den gleichen Verlauf auf. Ein weiteres Kennzeichen der Erfindung ist eine empfangsseitige, aus einem Tiefpassfilter und einem Schwellwert-Detektor bestehende Serienschaltung zur Umwandlung des vom genannten Begrenzer stammenden Ausgangssignals in ein Binärsignal. Das Tiefpassfilter weist dabei eine zwischen der genannten ersten und zweiten Frequenz liegende Grenzfrequenz auf und der Schwellwert-Detektor unterdrückt von der genannten Schwingung jeweils die erste Halbschwingung. Infolgedessen gibt diese Serienschaltung ein aus einer Impulsreihe bestehendes Signal ab, dessen Impulse der Dauer einer halben Schwingung der ersten Frequenz und dessen Impulszwischenräume entweder der Dauer einer halben Schwingung der ersten Frequenz oder der Summe aus der Dauer eines Schwingungspaketes der zweiten Frequenz und der Dauer einer halben Schwingung der ersten Frequenz entsprechen.

Die Erfindung wird nun anhand eines Ausführungsbeispiels erklärt.

Die Figuren 1 und 2 zeigen je das Blockschema des mit der Erfindung im Zusammenhang stehenden Teils eines Senders und eines Empfängers.

Die Figur 3 zeigt die verschiedenen den dargestellten Einrichtungen zugeführten, die von diesen abgegebenen und die während der Verarbeitung auftretenden Signale in Abhängigkeit von der Zeit.

Die Figur 4 zeigt in einem gegenüber der Figur 3 vergrösserten Massstab die Bildung eines Sinussignals auf digitale Weise.

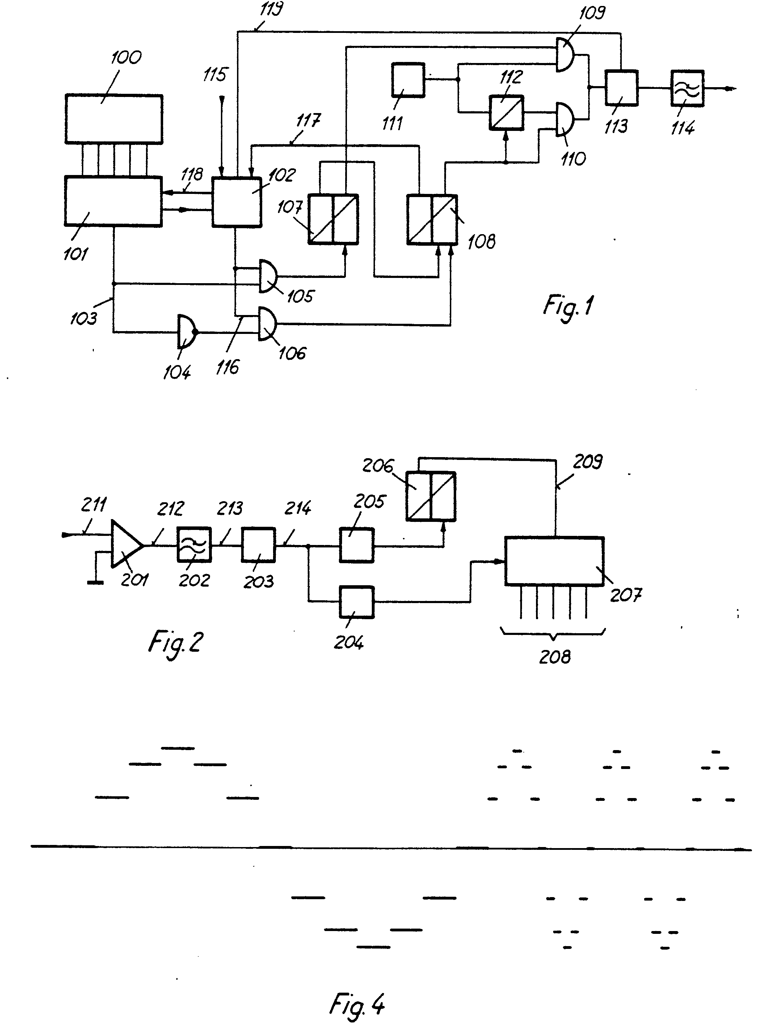

Ein Speicher 100 in Figur 1 enthält die zu übermittelnde binär kodierte Information, welche in nicht dargestellter Weise dort eingegeben wurde und welche mit den fünf Bits 10 110 angenommen ist. Ein Parallel-Serie-Wandler 101 legt, veranlasst durch die Steuerung 102, an seinen Ausgang 103 der Reihe nach die den gespeicherten Bits entsprechenden Potentiale an. Der Inverter 104 kehrt den Wert der Bits um, so dass vom UND-Tor 105 die Bits direkt, vom UND-Tor 106 dagegen deren umgekehre Werte weitergeleitet werden. Von den beiden monostabilen Multivibratoren 107 und 108 besitzt der Multivibrator 107 eine Zeitkonstante, die mindestens so lang ist wie diejenige des Multivibrators 108. Vorzugsweise sind die beiden Zeitkonstanten gleich gross gewählt.

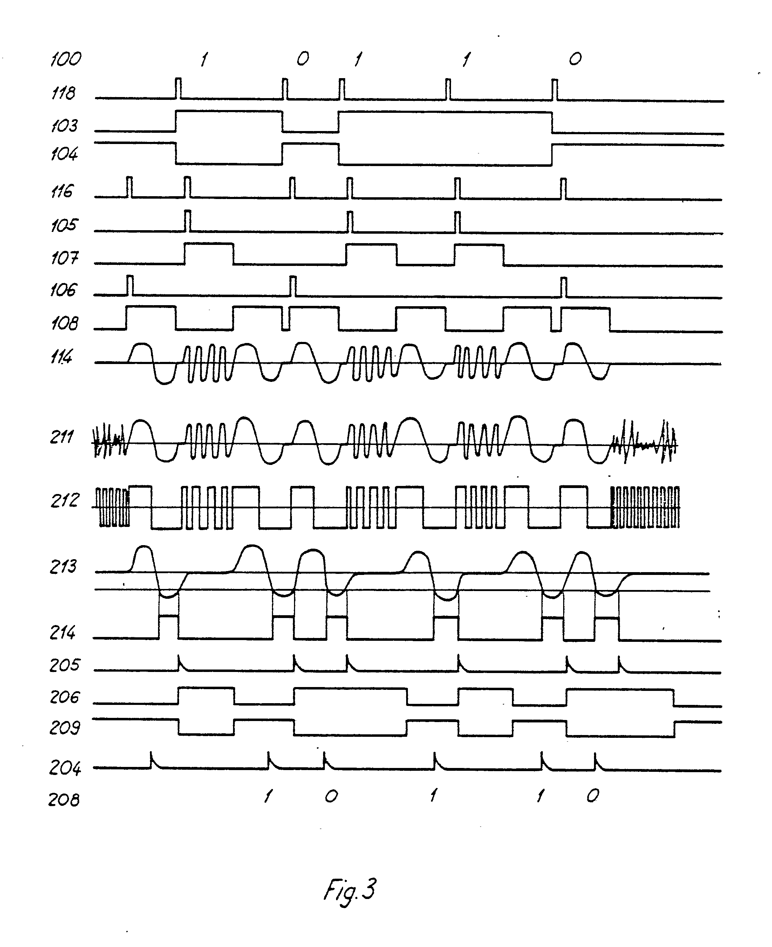

Die beiden Multivibratoren steuern die beiden UND-Tore 109 und 110. Der Multivibrator 107 wird dabei ausschliesslich über das Tor 105 angestossen, während der Multivibrator 108 sowohl über das Tor 106 als auch vom Multivibrator 107 bei dessen Rückkehr in die Ruhelage angestossen wird. Ein Impulserzeuger 111 gibt eine Impulsreihe ab, welche einerseits über das Tor 109 direkt und anderseits über den Frequenzteiler 112 und das Tor 110 dem Sinusformer 113 zugeführt wird. Dieser Sinusformer erzeugt aufgrund von zwölf aufeinanderfolgenden ihm zugeführten Impulsen auf digitale Weise ein angenähert einem Sinussignal entsprechendes Stufensignal. Die Arbeitsweise dieses Sinusformers ist in Figur 4 dargestellt. Drei verschieden grosse positive und drei negative Potentiale und das Nullpotential werden in zeitlichen Abständen, die durch die über eines der Tore 109 oder 110 zugeführte Impulsfolge bestimmt sind, nacheinander angeschaltet und ergeben Schwingungen, deren Frequenz einem Zwölftel der Frequenz der betreffenden Impulsfolge entspricht. Für den Frequenzteiler 112 ist ein Teilungsverhältnis von 1 : 4 angenommen, und somit verhalten sich auch die Frequenzen der erzeugten Sinussignale wie 1 : 4. Dieses Verhältnis wurde im vorliegenden Beispiel nur gewählt, um die Figuren 3 und 4 einigermassen übersichtlich zu gestalten. Praktisch empfiehlt es sich jedoch, das Verhältnis höher zu wählen, z. B. 1 : 16. Als geeignete Frequenz für diese Sinussignale haben sich für die tiefe Frequenz ca. 80 Hz und für die hohe Frequenz das sechzehnfache davon, d. h. ca. 1 280 Hz erwiesen.

Wie in der Figur 4 dargestellt ist, müssen von der tiefen Frequenz einzelne vollständige Schwingungen erzeugt werden. Dazu ist es notwendig, dass die Zeitkonstante des Multivibrators 108 genau der Dauer von zwölf vom Frequenzteiler abgegebenen Impulsen entspricht. Es ist daher vorzuziehen, anstelle der Multivibratoren Zähler anzuordnen, welche jeweils eine bestimmte Zahl der vom Impulserzeuger 111 oder vom Frequenzteiler 112 abgegebenen Impulse abzählen. Multivibratoren sind nur dargestellt um das Arbeitsprinzip besser erklären zu können.

Frequenzteiler und Sinusformer müssen synchronisiert werden, damit, sobald sich der Multivibrator 108 in der Arbeitslage befindet, die Bildung des Sinussignals mit einer vom Nullpunkt ausgehenden aufsteigenden Flanke einsetzen kann. Diese Synchronisierung wird dabei über die angedeuteten Pfeile für den Frequenzteiler 112 vom Multivibrator 108 und für den Sinusformer 113 von der Steuerung 102 aus vorgenommen.

Das vom Sinusformer 113 erzeugte, in Figur 4 dargestellte Signal wird anschliessend im Tiefpassfilter 114 gerundet. Figur 3, Zeile 114 zeigt dieses Signal, welches in nicht mit der Erfindung im Zusammenhang stehender Weise weiter verarbeitet wird.

Der in Figur 2 dargestellte Teil des Empfängers weist einen als Begrenzer wirkenden Komparator 201 auf, dem das vom Ausgang eines nicht dargestellten Diskriminators stammende, dem Ausgangssignal des Tiefpassfilters 114 entsprechende Signal 211 zugeführt wird. Dieser Komparator gibt, entsprechend der Polarität der zwischen seinen Eingängen angelegten Spannung, ein positives oder negatives, von der Höhe der Eingangsspannung unabhängiges Potential 212 ab. Beim Fehlen einer Eingangsspannung ist sein Ausgangspotential unbestimmt. Dieses Ausgangssignal 212 wird einem Tiefpassfilter 202 zugeführt, dessen Grenzfrequenz zwischen den beiden übermittelten Frequenzen liegt und vorzugsweise ungefähr das doppelte der tiefen Frequenz beträgt. Das Ausgangssignal dieses Tiefpassfilters, welches ein ausschliesslich einzelne Schwingungen der tiefen Frequenz enthaltender bipolarer Wellenzug ist, wird einem als Schwellwert-Detektor wirkenden Schmitt-Trigger 203 zugeführt. In diesem Schwellwert-Detektor werden von den eine bestimmte Polarität aufweisenden Teilen des genannten Signals Rechteckimpulse gebildet, welche in den beiden Differenziergliedern 204 und 205 weiter verarbeitet werden.

Das Differenzierglied 204 erzeugt einen Impuls aufgrund der Anfangsflanke eines ihm zugeführten Impulses, während das Differenzierglied 205 einen solchen Impuls in Abhängigkeit von der Endflanke erzeugt. Mit dem letztgenannten Impuls wird ein monostabiler Multivibrator 206 angestossen, dessen Zeitkonstante ungefähr gleich gross ist wie diejenige der Multivibratoren 107 und 108 und dessen Zeit jeweils neu zu laufen beginnt, wenn er während seines Arbeitszustandes angestossen wird. Einem Serie-Parallel-Wandler 207 wird über die Verbindung 209 ein Signal zugeführt, wenn sich der Multivibrator 206 im Ruhezustand befindet, und vom Differenzierglied 204 wird an den Wandler 207 ein Synchronisiersignal angelegt.

Wie bereits erklärt wurde, wird angenommen, dass in den Speicher 100 der zu übermittelnde Binärwert 10 110 eingegeben sei. Am Ausgang 103 des Parallel-Seriewandlers 101 liegt im Ruhezustand — wie auch aus der Figur 3 ersichtlich ist — der Binärwert 0, während somit am Ausgang des Inverters 104 der Binärwert 1 auftritt.

Aufgrund eines auf den Eingang 115 gegebenen Steuerbefehls wird von der Steuerung 102 über die Verbindung 116 vorerst ein Impuls auf die Tore 105 und 106 gegeben, wodurch die Erzeugung eines vom zu übermittelnden Binärwert unabhängigen Startsignals bewirkt wird. Somit wird über das Tor 106 der Multivibrator 108 angestossen, welcher in später erklärter Weise die Erzeugung eines Wellenzuges bewirkt. Bei der Rückkehr des Multivibrators 108 in seinen Ruhezustand gibt er über die Verbindung 117 einen Impuls ab, welcher bewirkt, dass die Steuerung 102 über die Verbindung 118 dem Wandler 101 den Befehl erteilt, an seinen Ausgang 103 den ersten zu übermittelnden Binärwert anzulegen.

Anschliessend gibt die Steuerung 102 wiederum über die Verbindung 116 die Tore 105 und 106 frei. Der als erster Binärwert zu übermittelnde Wert « 1 » bewirkt nun über das Tor 105 das Anstossen des Multivibrators 107, welcher nach seiner Rückkehr in den Ruhezustand den Multivibrator 108 anstösst. Der Multivibrator 108 seinerseits — wie bereits vorher beschrieben wurde — veranlasst bei seiner Rückkehr in die Ruhelage die Steuerung 102, den nächsten Binärwert zu verarbeiten. Dieser nächste Wert ist « 0 », welcher wie bei der Erzeugung des Startsignals das Anstossen des Multivibrators 108 bewirkt.

Zusammenfassend wird festgehalten, dass jeweils für den Binärwert « 0 » der Multivibrator 108 allein angestossen wird, während für den Binärwert « 1 » zuerst der Multivibrator 107 und anschliessend der Multivibrator 108 angestossen werden. Die zeitlichen Abstände der von der Steuerung 102 über die Verbindungen 118 und 116 abgegebenen Steuerimpulse sind daher nicht gleich gross.

Der Multivibrator 107 bewirkt nun, solange er sich im Arbeitszustand befindet, dass die vom Impulserzeuger 111 abgegebene Impulsreihe über das Tor 109 auf den Sinusformer 113 gelangt, wo, wie früher anhand der Figur 4 erklärt wurde, zusammen mit dem Tiefpassfilter 114 ein sinusförmiges Signal mit einem Zwölftel der Impulsfrequenz des Impulserzeugers 111 erzeugt wird. Solange sich dagegen der Multivibrator 108 im Arbeitszustand befindet, erhält der Sinusformer über den Frequenzteiler 112 und das Tor 110 eine verminderte Impulsfrequenz und gibt daher auch ein Sinussignal mit einer um das Teilungsverhältnis des Frequenzteilers 112 verminderten Frequenz ab. Ueber die Verbindung 119 wird jeweils der Sinusformer derart eingestellt, dass die erzeugten Schwingungspakete immer am Nullpunkt beginnen und den gleichen Verlauf nehmen.

Das von der in Figur 1 dargestellten Schaltungsanordnung abgegebene Signal ist in Figur 3 Zeile 114 dargestellt. Es ist eine Folge von Schwingungen mit hoher und tiefer Frequenz. Nach einer einzigen Schwingung tiefer Frequenz, die als Startsignal dient, ist der Binärwert « 1 » durch eine Folge von vier Schwingungen der hohen und einer einzigen Schwingung der tiefen Frequenz dargestellt, während der Binärwert « 0 » durch eine einzige Schwingung der tiefen Frequenz gebildet ist. Werden die Schwingungen der tiefen Frequenz für sich allein betrachtet, ist es somit für den übertragenen Binärwert massgebend, ob einer Schwingung ein Zwischenraum vorangeht oder nicht. Das aus dem Filter 114 austretende Signal wird nun in nicht dargestellter Weise einem Träger aufmoduliert und ausgesendet. Dieses ausgesendete Signal wird von einem Empfänger empfangen und demoduliert, wobei das demodulierte Signal in Zeile 211 dargestellt ist. Um die Zusammenarbeit der verschiedenen Teile und damit die gegenseitige Abhängigkeit klar darstellen zu können, wurden in der Figur 3 die kurzen Impulse übertrieben breit und damit ein Teil der Schaltzeiten übertrieben lang dargestellt. Die in den Zeilen 114 und 211 zwischen einem Teil der Schwingungen gezeigten Lücken sind auf diesen Umstand zurückzuführen und sind in Wirklichkeit wegen der zu vernachlässigenden Dauer der Impulse und Schaltzeiten gar nicht vorhanden.

Das Signal 211 am Empfangsort wird dort dem Eingang des Komparators 201 zugeführt. An dessen Ausgang 212 erscheint ein Rechtecksignal, dessen Periodenlängen und Polaritätsverhältnisse mit dem am Eingang 211 angelegten Signal übereinstimmen, dessen Amplitude aber von der Uebertragungsstrecke zwischen Sender und Empfänger und vom Verstärkungsgrad der im Sender und im Empfänger angeordneten Verstärker unabhängig ist. Dieses in Figur 3 in der Zeile 212 abgebildete Rechtecksignal, welches vor seinem Anfang und nach seinem Ende durch Rauschen hervorgerufene unregelmässige Impulsfolgen aufweist, wird dem Tiefpassfilter 202 zugeführt, an dessen Ausgang 213 nur noch die langsamen Schwingungen mit gerundeten Formen erscheinen. Der Schwellwert-Detektor 203, dem dieses Signal zugeführt wird, spricht nur auf die darin enthaltenen negativen Potentiale an, die eine bestimmte Grenze überschreiten und formt somit daraus Rechteckimpulse, wie sie in Figur 3, Zeile 214 dargestellt sind. Die Länge dieser Impulse entspricht somit der Dauer einer halben Schwingung der tiefen Frequenz, und die Abstände zwischen den Impulsen entsprechen entweder ebenfalls einer halben Schwingung der tiefen Frequenz oder der Summe aus der Dauer eines Schwingungspakets der hohen Frequenz und der Dauer einer halben Schwingung der tiefen Frequenz. Unter der Voraussetzung, dass die beiden Multivibratoren 107 und 108 die gleiche Zeitkonstante aufweisen sind die Abstände zwischen den Impulsen entweder ungefähr gleich breit oder dreimal so breit wie die Impulse, wobei ein Impuls mit einem vorangehenden kurzen Zwischenraum einen Binärwert von « 0 » und ein Impuls mit einem vorangehenden langen Zwischenraum einen Binärwert von « 1 » darstellt.

Die Impulse werden nun den zwei Differenziergliedern 204 und 205 zugeführt. Ueber das Differenzierglied 205 wird von der Rückflanke jedes Impulses der monostabile Multivibrator 206 angestossen, welcher eine Zeitkonstante von ungefähr der eineinhalbfachen Breite der Impulse aufweist, während über das Differenzierglied 204 bei jeder Vorderflanke ein Synchronisiersignal an den Serie-Parallel-Wandler 207 abgegeben wird.

Aufgrund jedes vom Differenzierglied 204 erzeugten Impulses wird ein Binärwert in den Wandler eingelesen, und zwar der Wert « 0 », wenn sich in diesem Zeitpunkt der Multivibrator 206 in der Arbeitslage und der Wert « 1 », wenn sich der Multivibrator in der Ruhelage befindet. Der erste vom Differenzierglied erzeugte Impuls wird dabei als Startimpuls nicht berücksichtigt. Nach Abschluss des Empfangs der Signale stehen somit die Binärwerte 10 110 an den Ausgängen 208 des Wandlers an, welche den sendeseitig in den Speicher 100 eingespeicherten Werten entsprechen. Das Verbringen des Wandlers in die Ausgangsstellung und die Weiterverarbeitung der genannten Werte steht nicht mit der Erfindung im Zusammenhang und ist daher nicht beschrieben.

Das schnelle Sinussignal, welches durch direkte Einwirkurg des Impulserzeugers 111 auf den Sinusformer 113 gebildet wird und vom Tiefpassfilter 202 wiederum weggefiltert wird ist im Zusammenhang mit der Verwendung eines Komparators als Begrenzer notwendig, indem dieser Komparator, wenn er zwischen zwei langsamen Sinussignalen überhaupt kein Signal erhielte, dauernd ein Potential beliebiger Polarität abgehen würde, wodurch am Ausgang des Schwellwert-Detektors 203 nicht mit Sicherheit ein Nullpotential auftreten würde.

Wie aus der vorstehenden Abhandlung hervorgeht, ergibt sich durch die beschriebene empfangsseitige Auswerte-Anordnung mit einem Tiefpassfilter und einem Schwellwert-Detektor eine viel einfachere Auswertung von mit Hilfe von Sinusschwingungen übermittelten binären Signalen, als dies mit einer allgemein üblichen Frequenz-Versatz-Methode (FSK), bei welcher zwei verhältnismässig nahe beieinanderliegende Frequenzen verwendet sind, möglich ist. Der senderseitige Aufwand bleibt dabei im Rahmen der konventionellen Technik.

**Patentanspruch**

System zur Funkübertragung eines binär kodierten Signals, mit sendeseitigen Schaltungsmitteln (111, 112, 113), welche das Signal in geeigneter Weise umformen und das umgeformte Signal einem Hochfrequenzsignal in einer beliebigen, für die Uebertragung von Analogsignalen geeigneten Modulationsart aufmodulieren und mit empfangsseitigen Schaltungsmitteln, welche das Hochfrequenzsignal demodulieren und das demodulierte Signal einem ein von der momentanen Polarität des an ihn angelegten Signals abhängiges bipolares Signal abgebenden Begrenzer (201) zuführen, gekennzeichnet durch eine derartige Ausbildung der genannten sendeseitigen Schaltungsmittel (111, 112, 113), dass diese Schaltungsmittel einen ihnen zugeführten Binärwert erster Art (0) als eine einzelne vollständige Sinusschwingung (Fig. 4) einer ersten Frequenz und einen ihnen zugeführten Binärwert zweiter Art (1) in eine aus einem Schwingungspaket einer zweiten Frequenz und einer einzelnen vollständigen Schwingung der genannten ersten Frequenz bestehende Folge (211) umformen, wobei die genannte zweite Frequenz ein die Zahl drei übersteigendes Vielfaches der genannten ersten Frequenz ist und die genannte einzelne Schwingung in allen Fällen den gleichen Verlauf aufweist und gekennzeichnet durch eine empfangsseitige aus einem Tiefpassfilter (202) und einem Schwellwert-Detektor (203) bestehende Serienschaltung zur Umwandlung des vom genannten Begrenzer (201) stammenden Ausgangssignals (212) in ein Binärsignal (214), wobei das Tiefpassfilter (202) eine zwischen der genannten ersten und zweiten Frequenz liegende Grenzfrequenz aufweist und der Schwellwert-Detektor (203) von der genannten Schwingung (213) jeweils die erste Halbschwingung unterdrückt, wodurch diese Serienschaltung ein aus einer Impulsreihe bestehendes Signal (214) abgibt, dessen Impulse der Dauer einer halben Schwingung der ersten Frequenz und dessen Impulszwischenräume entweder der Dauer einer halben Schwingung der ersten Frequenz oder der Summe aus der Dauer eines Schwingungspaketes der zweiten Frequenz und der Dauer einer halben Schwingung der ersten Frequenz entsprechen.

**Claim**

System for radio transmission of a binary-coded signal, having circuit means (111, 112, 113) at the transmitting end which convert the signal in a suitable manner and modulate the converted signal upon a radio-frequency signal in any type of modulation suitable for the transmission of analog signals, and having circuit means at the receiving end which demodulate the radio-frequency signal and supply the demodulated signal to a limiter (201) delivering a bipolar signal dependent upon the momentary polarity of the signal applied thereto, characterized by a formation of the said transmitting-end circuit means (111, 112, 113) such that these circuit means convert a binary value of a first kind (0) supplied to them into a single, complete sinusoidal oscillation (Fig. 4) of a first frequency and a binary value of a second kind (1) supplied to them into a sequence (211) consisting of an oscillation packet of a second frequency and a single, complete oscillation of the said first frequency, the said second frequency being a multiple in excess of three of the said first frequency, and the said single oscillation having the same shape in all cases, and characterized by a receiving-end series connection consisting of a low-pass filter (202) and a threshold-value detector (203) for converting the output signal (212) emanating from the said limiter (201) into a binary signal (214), the low-pass filter (202) having a critical frequency situated between the said first and second frequencies, and the threshold-value detector (203) suppressing in each case the first semi-oscillation of the said oscillation (213), whereby this series connection delivers a signal (214) consisting of a pulse train, the pulses of which correspond to half an oscillation of the first frequency and the pulse separations of which correspond either to the duration of half an oscillation of the first frequency or to the sum of the duration of an oscillation packet of the second frequency and the duration of half an oscillation of the first frequency.

## Revendication

Système pour la transmission radiophonique d'un signal en code binaire, avec, côté émetteur, des moyens à circuit (111, 112, 113) qui transforment le signal d'une façon adéquate et qui modulent le signal transformé sur un signal à haute fréquence selon un mode de modulation quelconque approprié pour la transmission de signaux analogiques, et avec, côté récepteur, des moyens à circuit qui démodulent le signal à haute fréquence et qui amènent le signal démodulé à un limiteur (201) qui délivre un signal bipolaire dépendant de la polarité momentanée du signal qui lui est appliqué, caractérisé par un agencement des dits moyens à circuit côté émetteur (111, 112, 113) tel que ces moyens à circuit transforment une valeur binaire d'un premier genre (0) qui lui est délivrée en une unique oscillation sinusoïdale (fig. 4) d'une première fréquence, et une valeur binaire d'un second genre (1) qui lui est délivrée en une suite (211) consistant en un paquet d'oscillations d'une seconde fréquence et en une unique oscillation complète de la dite première fréquence, la dite seconde fréquence étant supérieure à la première d'un facteur supérieur à trois et la dite unique oscillation présentant en tous les cas la même évolution, et caractérisé par la présence, côté récepteur, d'un branchement-série comprenant un filtre passe-bas (202) et un détecteur à valeur de seuil (203), pour la transformation du signal de sortie (212) provenant du dit limiteur (201) en un signal binaire (214), le filtre passe-bas (202) présentant une limite de fréquence située entre les dites première et seconde fréquences, tandis que le détecteur à valeur de seuil (203) supprime chaque fois la première semi-oscillation de la dite oscillation (203), de façon que le dit branchement-série délivre un signal (214) constituant en une succession d'impulsions dont les impulsions correspondent à la durée d'une demi-oscillation de la première fréquence et dont les intervalles entre les impulsions correspondent soit à la durée d'une demi-oscillation de la première fréquence soit à la somme de la durée d'un paquet d'oscillations de la deuxième fréquence et de la durée d'une demi-oscillation de la première fréquence.

0 093 819

Fig. 1

Fig. 2

Fig. 4

1

Fig. 3